# EUROPEAN PATENT APPLICATION

(11) **EP 4 803 929 A1**
(43) Date of publication of application: **09.09.2026**
(21) Application number: 26161905.0
(22) Date of filing: 03.03.2026
(51) Int. Cl.: G01S 11/06, H04B 17/309, H04B 17/391, G06N 3/08

(54) **DETERMINING THE DISTANCE BETWEEN A TRANSMITTER AND A RECEIVER AS A FUNCTION OF AN OBJECT INDUCING ATTENUATION OF A RADIO-FREQUENCY SIGNAL**

(30) Priority: 05.03.2025 US 202519071494
(71) Applicant: Nokia Solutions and Networks Oy, 02610 Espoo (FI)
(72) Inventor: BANERJEE, Avishek, Murray Hill, NJ (US); RAVI, Nirupama, Murray Hill, NJ (US)
(74) Representative: Nokia EPO representatives

(57) **Abstract**

In some embodiments, there may be provided a method including receiving, by a machine learning model, channel state information for at least one radio frequency signal; generating, by the machine learning model, a prediction generated using at least the channel state information for the at least one radio frequency signal, wherein the prediction indicates one or more objects causing blockage to the at least one radio frequency signal; modifying, based on the prediction of the one or more objects, a path loss model used to determine a distance between a receiver and a transmitter of the at least one radio frequency signal; and determining, based on the modified path loss model, at least a distance between the receiver and the transmitter. Related systems, methods, and articles of manufacture are also disclosed.

## Description

### FIELD

The subject matter described herein relates machine learning.

### BACKGROUND

Machine learning (ML) models may learn via training. The ML model may take a variety of forms, such as an artificial neural network (or neural network, for short), decision trees, and/or the like. Some neural networks may be considered "deep neural networks," which refers to a neural network including at least two hidden layers. The training of the ML model may be supervised (with labeled training data), semi-supervised, or unsupervised. When trained, the ML model may be used to perform an inference task.

### SUMMARY

In some embodiments, there may be provided a method that includes receiving, by a machine learning model, channel state information for at least one radio frequency signal; generating, by the machine learning model, a prediction generated using at least the channel state information for the at least one radio frequency signal, wherein the prediction indicates one or more objects causing blockage to the at least one radio frequency signal; modifying, based on the prediction of the one or more objects, a path loss model used to determine a distance between a receiver and a transmitter of the at least one radio frequency signal; and determining, based on the modified path loss model, at least a distance between the receiver and the transmitter.

In some variations, one or more of the features disclosed herein including the following features can optionally be included in any feasible combination. The path loss model may be modified by adjusting or selecting, based on the prediction of the one or more objects, one or more coefficients of the path loss model. The one or more coefficients may include a mean path loss coefficient, a path loss exponent, and/or a standard deviation of a random variable. The machine learning model may be trained by using a digital twin configured to include at least one channel state information mapped to at least one type of radio frequency blockage caused by at least one object, wherein the at least one object may include a building, a tree, a road, a field, a vehicle, a person, and/or a body of water. The training of the machine learning model may further include applying the at least one channel state information to an input of the machine learning model to enable one or more weights of the machine learning model to converge and learn how to predict, at an output of the machine learning model, the at least one object. The machine learning model may be comprised at the receiver. The channel state information for at least one radio frequency signal may indicate channel state for a line of sight portion of the at least one radio signal.

The above-noted aspects and features may be implemented in systems, apparatus, methods, and/or articles depending on the desired configuration. The details of one or more variations of the subject matter described herein are set forth in the accompanying drawings and the description below. Features and advantages of the subject matter described herein will be apparent from the description and drawings, and from the claims.

### DESCRIPTION OF DRAWINGS

In the drawings,
FIG. 1 depicts an example of a system including a machine learning model configured to predict RF blockage, in accordance with some embodiments.
FIG. 2 depicts an example of a machine learning training process, in accordance with some embodiments;
FIGs. 3A and 3B depict examples of multipath, in accordance with some embodiments;
FIG. 4 depicts an example of a process for predicting RF blockage, in accordance with some embodiments;
FIG. 5 depicts an example of an apparatus including a machine learning model trained to predict RF blockage, in accordance with some embodiments; and
FIG. 6 depicts another example of an apparatus, in accordance with some embodiments.

Like labels are used to refer to same or similar items in the drawings.

### DETAILED DESCRIPTION

With the advent of sixth generation (6G) and beyond wireless systems, wireless communication and localization services are expected to evolve. With full implementation of 6G for example, 6G networks may go beyond just providing ubiquitous communication by also providing integrated, high-accuracy localization services. This effectively merges communication and positioning capabilities into a unified system. As such, an element of the 6G positioning capabilities is accurate localization. To that end, machine learning (ML) may be used to play a transformative role in 6G localization capabilities, so as to enhance precision, efficiency, and/or applicability of localization services within 6G.

An aspect of localization is referred to as environment awareness. For example, wireless channel state information (CSI) and physics based path loss models may be used to localize one or more devices. With respect to the phrase "channel state information," it generally refers the use of one or more values, such as one or more channel coefficients (e.g., channel gains, h) and their various delays and/or other channel properties to represent a state of a channel. In wireless communications for example, the effect of the channel on transmitted signal, may be represented as a sum of channel gains with their delays affecting the same transmitted symbol, leading to the reception of multiple replicas or copies of the data symbol but with different gains and/or delays resulting from multi-path propagation and other impairments affecting the signal (e.g., large-scale fading, noise, and/or the like).

However, path loss models may be heavily dependent on a variety of factors, such as environmental awareness factors. For example, a path loss model may be dependent on the environment associated with a transmitter-receiver pair. When the environment between the transmitter-receiver pair includes certain objects, such as buildings, trees, grass fields, bodies of water, rangeland, and/or other environmental objects, these objects may cause varied amounts of RF blockage (including reflection, scattering, and/or other physical effects which impact path loss) to the RF signals associated with the path loss between the transmitter and the receiver. Moreover, although a path loss model may be trained for a specific transmitter-received pair environment, the path loss model may not be generalized and, as such, usable in a variety of different wireless environments.

In some embodiments, there is provided a machine learning (ML) model that outputs RF path blockage predictions using (e.g., based on) an input comprising measurements associated with RF signals received at a receiver. For example, a receiver may provide to the ML model channel state information for the RF signals received from a transmitter. The ML model may then provide, as an output, a prediction of the RF path blockage encountered by the received RF signals.

Although some of the examples refer to channel state information, other types of measurements associated with or determined from the received RF signals may be used as well as an input to the ML model to enable a prediction of the objects in the receiver-transmitter RF signal path.

The ML model's predicted RF path blockage may indicate that the path between the transmitter and the receiver includes objects, such as buildings and trees. In this example, the predicted RF path blockage may be used to optimize a path loss model, such that the optimized path loss model provides an enhanced localization of the receiver and/or the transmitter. The enhanced location may include at least an optimized distance between the transmitter and receiver pair. As such, the ML model may serve as an RF blockage predictor that predicts the types of blockages in the wireless path(s) between a transmitter and a receiver, so as to enable optimizing the path loss model using the types of predicted objects causing RF blockages. The optimized path loss model may then be used to provide an enhanced localization of the receiver, such as a distance between the transmitter and the receiver.

Although some of the examples refer to RF blockage, the phrase "RF blockage" is used to generally refer to objects, between a transmitter and receiver, that may affect the RF signal (e.g., RF signal blockage, RF signal attenuation, RF signal reflection, RF signal multipath, and/or other physical effects which impact RF path loss). Moreover, although some of the examples refer to CSI, other types of measurements associated with or determined from the received RF signals may be used as well as an input to the ML model to enable a prediction of the objects in the receiver-transmitter RF signal path.

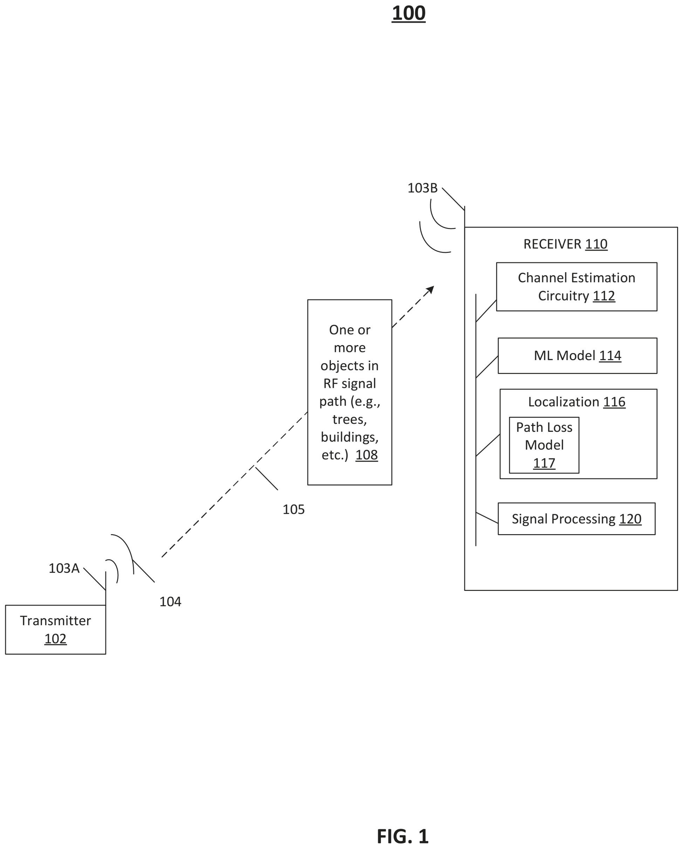

FIG. 1 depicts an example of a system 100 including a transmitter 102 and a receiver 110. In the example of FIG. 1, the transmitter 102 may transmit one or more RF signals 104 (using for example at least one antenna 103A) along at least one RF path 105 towards for example the receiver 110. In the example of FIG. 1, the RF path 105 (over which the RF signals 104 travel) may encounter one or more objects 108. These objects may represent RF blockage to the RF signals. For example, objects, such as buildings, trees, grass fields, bodies of water, rangeland, and/or other environmental factors, may affect the RF signals and, as such, the RF path loss between the transmitter 102 and the receiver 110. For example, the objects may attenuate the RF signals as they travel towards the receiver 110.

In some embodiments, the receiver 110 receives one or more RF signals 104 transmitted by the transmitter 102. Moreover, the receiver 110 may observe the received RF signals, and may determine, for example, the wireless channel state information (CSI), the received signal strength information (RSSI), and/or other measurements with respect to the RF signals 104. The determined measurements (e.g., RSSI, CSI, and/or the like) may then be used to predict (for the transmitter-receiver pair) the types of objects 108 (e.g., buildings, trees, field, roads, etc.) causing any RF blockage in the path 105 of the RF signals 104.

In some implementations, the received RF signals 104 may be processed by channel estimation circuitry 112. For example, the channel estimation circuitry may determine, using the received RF signals, channel state information (CSI), which represents the state of a channel along the path 105, for example. In the case of 5G and 6G for example, the CSI may be based on a reference signal (e.g., a channel state information reference signal, CSI-RS) transmitted by a base station, such as transmitter 102. Based on the reference signal, the channel estimation circuitry 112 may determine CSI parameters, such as a channel quality indicator (CQI), a precoding matrix indicator (PMI), a rank indicator (RI), and/or other indicators. Alternatively, or additionally, the channel estimation circuitry may determine, using the received RF signals, signal to interference plus noise (SINR), received signal strength indicator (RSSI), and/or the like. Alternatively, or additionally, the RF signal measurements may be determined by a UE and reported back to a base station, where the RF signal measurements (e.g., CSI-RS) are provided to a ML model 114 to predict the RF blockage caused by objects along path 105 between a transmitter-receiver pair. Alternatively, or additionally, the channel state information may be determined or derived as a function of the wireless channel (h) or the corresponding one or more channel coefficients of that channel.

The CSI may be provided as an input to the ML model 114. The ML model (which is trained as described further below) may, based on the input, output a prediction of the one or more objects 108 in the path 105. This prediction may thus provide an indication of the RF blockages that affect path loss and, in particular, a path loss model. For example, the ML model's output (which predicts the objects 108 in the path 105) may be provided to the localization circuitry 116, where the path loss model (labeled PL model 117) is optimized based on the ML model's output. The RF path loss model may be optimized by fine tuning (e.g., adjusting path loss coefficients of) the path loss model based on the object(s) 108 predicted by the ML model. The optimized path loss model may be fine-tuned using path loss coefficients for the predicted object(s), such as a building, tree, etc.

Each of the objects 108 (which represent RF blockages and/or reflectors) may, as noted, have a different path loss coefficient. The phrase "path loss coefficient" (α) refers to a value indicative of a rate at which signal power decreases as it traverses through a given object. The "path loss coefficient" may be used in a path loss model to predict how much a signal attenuates over a distance between a transmitter and receiver pair. The trained ML model may be used to predict the object (e.g., type of RF blockage) in real (or near real) time to enable the ML model's output (which indicates the object type(s)) to be used to optimize a path loss model, which is then used to provide an optimized location for the receiver, such as the receiver 110.

For example, the one or more CSI measurements may be provided to the trained ML model 114, which then predicts (e.g., classifies, detects, indicates, provides, etc.) the types of objects 108 causing RF blockage in the path 105 between the transmitter 102 and the receiver 110. The path loss model 117 may then be optimized by for example fine tuning the path loss model, such as adjusting the path loss coefficients to take into account the one or more objects (e.g., types of objects) indicated by the ML model. The optimized path loss model may for example provide an optimized distance between the transmitter 102 and the receiver 110, and thus improve localization. This distance along with for example other information (e.g., angle of arrival or other localization information) may be used to further enhance localization of the transmitter and/or receiver, for example.

In the example of FIG. 1, the transmitter 102 may be comprised in a user equipment, such as a smartphone or other type of wireless device. When this is the case, the receiver 110 may be comprised in a base station (e.g., a 5G base station, 6G base station, WiFi access point, or other type of wireless access point, and/or the like). Alternatively, or additionally, the transmitter 102 may be comprised in a base station, while the receiver 110 may be comprised in a user equipment, such as a smartphone and/or the like.

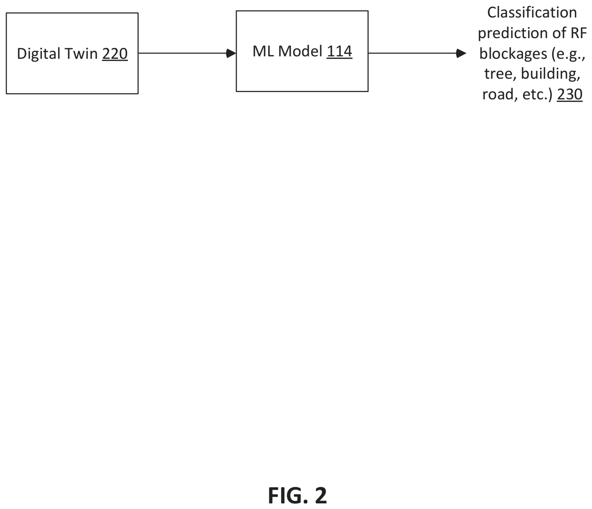

Referring to FIG. 2, the ML model 114 may be trained based at least in part on simulated data provided by the digital twin 220. In some embodiments, the digital twin 220 is used to simulate the different types of wireless environments including the one or more objects 108 that might be encountered between one or more transmitter-receiver pairs. The phrase "digital twin" refers to a digital, virtual representation of a real world wireless environment (including objects 108 which may cause RF blockage) between transmitter and receiver pairs. For example, the digital twin (also referred to herein as a wireless environment blockage model) may provide a simulation of various, different outdoor wireless environments including different types of RF blockages, such as different objects corresponding to one or more buildings, one or more trees, one or more roads, one or more fields, one or more vehicles, one or more people, one or more bodies of water (e.g., river, pond, lake, etc.) using a physics-based RF signal propagation model, such as an RF path-loss model.

Before providing additional description with respect to the ML model 114, ML model training, or the digital twin 220, the following description relates to wireless channel characterization.

The RF signal, such as RF signal 104 (which is transmitted by transmitter 102) may be reflected, refracted, and/or attenuated by one or more objects 108 in the RF signal path 105 while the RF signal travels from the transmitter 102 to the receiver 110. In this example, different copies of the same RF signal 104 (e.g., due to multipath, etc.) may reach at the receiver 110 after traveling different distances, and these different copies may be attenuated at different levels based on the objects 108 (which are on the path 105 between the transmitter 102 to the receiver 110). The RF signal attenuation may depend at least in part on the path loss coefficient for the different types of objects encountered on the path(s) 105.

In wireless communication, the receiver 110 may receive a composite RF signal (e.g., due to the multipath) from the transmitter 102 after the composite RF signal has traveled across paths with for example different distances (*d*), attenuations (*a*), and/or reflections (*ϕ*). This composite RF signal effect (which is caused by the wireless environment including the different objects 108) is denoted as the wireless channel (h). For an RF signal transmitted by the transmitter 102 at frequency *f* (wavelength *λᵢ*), the multipath, wireless channel (h) may be represented as follows: ${h}_{i} = {\sum }_{n}^{N} {a}_{n} {e}^{\frac{- j 2 π {d}_{n}}{{λ}_{i}} + j {ϕ}_{n}}$ wherein *i* is the subcarrier, h*ᵢ* is the channel response of the *i*^{th} subcarrier, *n* is the *n*^{th} multipath component, *N* is the total number of multipaths, *aₙ* is attenuation of the *n*^{th} multipath component, *dₙ* is distance travelled by *n*^{th} multipath component, and *ϕₙ* is the phase of the *n*^{th} multipath component. For a single antenna (e.g., antenna 103B at the receiver 110), a multipath channel may be described by a set of 3-tuples, such as the set of parameters {(distance *d*, attenuation *a*, and reflections *ϕ*)}.

As noted above, the path loss models may be used to understand the influence of different objects 108 on RF signals traversing one or more paths between a transmitter and receiver pair, such as the transmitter 102 and the receiver 110. For example, a log-distance path loss model may be used to define (e.g., describe, characterize, etc.) the large-scale path loss between the transmitter 102 and the receiver 110 and, as such, distance between a transmitter-receiver pair. The log-distance path loss model may be used to describe path loss PL(d) in decibels as follows: $PL \left(d\right) = PL \left({d}_{0}\right) + 10 nlog \left(d/d0\right) + {N}_{σ}$ wherein **d** is the distance the RF signal travels from the transmitter 102 to the receiver 110, *PL*(*d*₀) is the mean path loss at a known reference distance d₀, n is the path loss exponent of the corresponding environment, and Nσ is a random variable (e.g., a zero-mean Gaussian random variable) with a standard deviation of σ.

An advantage of the log-distance path-loss model is that it can model the path loss well in different wireless environments with appropriate path loss parameters n and σ.

The underlying physics of a wireless channel and the path loss model may be used to configure the digital twin 220 during a training phase. The digital twin 220 may include "simulated" channel state information (CSI) data for different scenarios (e.g., using different distances between receiver and transmitter pairs, objects along the path affecting path loss, etc.), wherein the generation is based on the underlying physics of channel propagation (e.g., using a path loss model) between a transmitter and a receiver. For example, the parameters used to generate the simulated CSI data for the digital twin may be varied to provide a robust model of a wireless environment with varied objects in the transmitter receiver path. Examples of the varied parameters may include:
- RF parameters, such as RF signal center frequency and RF signal bandwidth;
- Component distances **d** (e.g., dmin and dmax) between a transmitter and receiver pair;
- Attenuation (*a*) caused by the quantity (or number) of objects causing blockages and/reflections and the types of the objects (e.g., tree, building, etc.); and
- Phase *ϕ* (e.g., between -pi, pi) takes into consideration the change in the signal phase due to reflection, refraction of the signal.

For the digital twin generation, the RF signal center frequency and bandwidth may be chosen based on the RF signal itself (e.g., a Wi-Fi 2.4 GHz signal may have a center frequency of 2.45 GHz and a bandwidth of 20 MHz). Moreover, weather conditions may also impact the RF signal attenuation (*a*), so one or more center frequencies with different bandwidths based on weather may also be used to extract signatures of path loss of different objects for the digital twin.

The following provides an example of data generation for the digital twin 220. For example, one of the input scenarios may include a transmitter and a receiver placed at a certain distance (e.g., "x") apart. In this example, there may be the following known blockages between the transmitter and the receiver: (1) "one or more trees" at a certain distance "y" from the transmitter. Based on Equation 2, the digital twin may include or compute the path loss observed at a receiver using Table 1 and 2. Given the known transmitter signal power, the digital twin may determine (e.g., compute, provide, etc.) the attenuation (*a*), the distance of the path is "x", while phase may be chosen randomly between -pi and pi. Based on these inputs, the digital twin may use Equation 1 to generate the channel state information (CSI) for that particular scenario. As noted, these and other inputs may be varied to generate a robust model of the wireless environment with one or more objects in the transmitter receiver path.

In other words, the digital twin synthesizes CSI values iteratively using these different input scenarios (e.g., taking into account the maximum distance of communication (e.g., 200 meters for WiFi for a transmitter receiver pair), a quantity of blockages (e.g., 4), different types of blockages (e.g., trees, etc. as mentioned in Table 1). The digital twin may then generate a synthetic wireless environment by placing a variety (e.g., randomly selected) of blockages of random types at random positions within the maximum distance. Using Equation 2 for example, the pathless model may be used to determine overall pathloss for the scenario and may output a CSI for that scenario wireless environment. This process may repeat to build the digital twin so it provides a dataset (e.g., of 1 million datapoints, although other sizes may be implemented as well) of such synthetic wireless environments with known, reference labels of the blockages. The reference (labeled) data of blockages and CSI may be used to then train the ML model 114.

To illustrate operation of the digital twin 220, the following provides an additional example. Supposing for example, there is an object 108, such as a forest, between the transmitter 102 and the receiver 110, and the distance is set at 10 meters apart. The digital twin identifies the path loss coefficients for "forest" (see, e.g., Table 2). The digital twin then uses these path loss coefficients to calculate the path loss (e.g., using Equation [2]). For example, the path loss might be about 60 dB. With a known transmitter 102 power (e.g., 20 dBm), the received signal power is estimated at about -40dBm. Equation [1] may then be used to synthesize the CSI values (given d equal to 10 meters and received signal power equal to - 40 dBm). This CSI value is then feed into the ML model 114 during training. The input to the ML model is the CSI values and true (or labeled) output classification is forest (or the parameters of the Forest in Table 2).

Each multipath for the RF signal 104 may, as noted, be described or represented by a set of 3-tuples, {(distance d, attenuation *a*, reflections *ϕ*)} in accordance with Equation [1] above. The component distance (*d*) may depend on, among other things, the RF link. For WiFi for example, the parameters (e.g., dmin, dmax) may range between 0 to 200 meters (m). The range may depend on a delay spread of the RF link. The attenuation (*a*) may determine how the RF signal gets attenuated as it travels through the environment. Some examples of the objects 108 that affect the RFs signal 104 are listed at Table 1. Examples of the path loss coefficients for the objects of Table 1 are shown at Table 2. In the case of a building for example, the value 23.091 denotes mean path loss of a reference distance *d*₀, 4.499 denotes path loss exponent of the corresponding environment, and 1.887 denotes the standard deviation of a zero mean Gaussian random variable.

**Table 1**

| **Type** | **Description** |
|---|---|
| BUILDING | Built-up areas with human artifacts |
| FOREST | Trees |
| FIELD | Open space, farms |
| WATER | Rivers, oceans, lakes |
| RANGELAND | Green land, grassland |

**Table 2**

| Type | *PL*(*d*₀) | *n* | *σ* |
|---|---|---|---|
| BUILDING | 23.091 | 4.499 | 1.887 |
| FOREST | 21.254 | 3.616 | 0.891 |
| FIELD | 20.478 | 2.054 | 0.577 |
| WATER | 20.709 | 2.158 | 0.623 |
| RANGELAND | 20.392 | 2.275 | 0.657 |

Based on Equation 2 above, a physics-based path loss model may be used to determine path loss given different types of objects that cause RF blockage and/or reflection. The attenuation of the resultant signal received at a receiver may be dependent on the path loss due to these objects of Table 1 as well as other types of objects. For the digital twin 220 for example, different types of objects 108 may be used to simulate blockage/reflectors and compute the attenuation for each of the multipaths between transmitter 102 and receiver 110. In this way, the digital twin simulates wireless channels with the parameters as noted herein (e.g., CSI, objects with corresponding attenuation *a*, distance between transmitter receiver, *d*, reflections *ϕ*, etc.), such that the ML model can learn given an input of CSI the types of objects along the RF path.

During the training phase of the ML model 114, the input to the ML model 114 may include the simulated CSI generated by the digital twin 220 as shown at FIG. 2. In this example, the ML model 114 trains to classify 230 at its output whether the input (e.g., the simulated CSI from the digital twin 220) corresponds to an RF path having certain objects, such as a tree, building, and/or the like. For example, the digital twin may include simulated CSI values mapped to a label indicating object types (blockage(s)) as well as corresponding attenuation *a*, distance between transmitter receiver, *d*, , reflections *ϕ*, etc.). As noted, there may be a plurality of objects 108 that cause blockage and/or reflection along the RF signal's path(s), so the ML model 114 may provide a probability distribution of the possible type of objects along the path(s).

In the inference phase of the ML model 114, the ML model 114 may be used (as depicted at FIG. 1 for example) to provide real (or near-real) time indication of the types of objects causing reflection and/or blockage of the RF signal transmitted by the transmitter 102 towards the receiver 110. For example, the UE may observe the received RF signal and use channel estimation to estimate the CSI.

Moreover, the receiver 110 may include signal processing circuitry 120 to identify any underlying multipath RF signals of the RF channel and the distances the multipath RF signals have travelled. In some embodiments, the CSI measurements (which is used as an input to the ML model 114) includes the line of sight (LOS), so signal processing circuitry may be used select the LOS signal (or suppress or filer non-line of sight multi-path). For example, Equation [1] may be revised as follows: ${h}_{i} = {\sum }_{n}^{2} {a}_{n} {e}^{\frac{- j 2 {πd}_{n}}{{λ}_{i}} + {jϕ}_{n}} = {a}_{1} {e}^{\frac{- j 2 {πd}_{1}}{{λ}_{i}} + {jϕ}_{1}} + {a}_{2} {e}^{\frac{- j 2 {πd}_{2}}{{λ}_{i}} + {jϕ}_{2}}$ wherein i is the subcarrier, h*ᵢ* is the channel response of the *i*^{th} subcarrier, n is the *n*^{th} multipath component, 2 is the total number of multipaths in this example, *aₙ* is attenuation of the *n*^{th} multipath component, *dₙ* is distance travelled by *n*^{th} multipath component, and *ϕₙ* is the phase of the *n*^{th} multipath component. With respect to Equation [3}, the summation expression is revised as an addition of the 2 components, while *a₁* is attenuation of the *1^{st}* multipath component, *d₁* is distance travelled by *1^{st}* multipath component , and *ϕ₁* is the phase of the *1^{st}* multipath component; *a₂* is attenuation of the *2^{nd}* multipath component, *d₂* is distance travelled by *2^{nd}* multipath component, and *ϕ₂* is the phase of the *2^{nd}* multipath component.

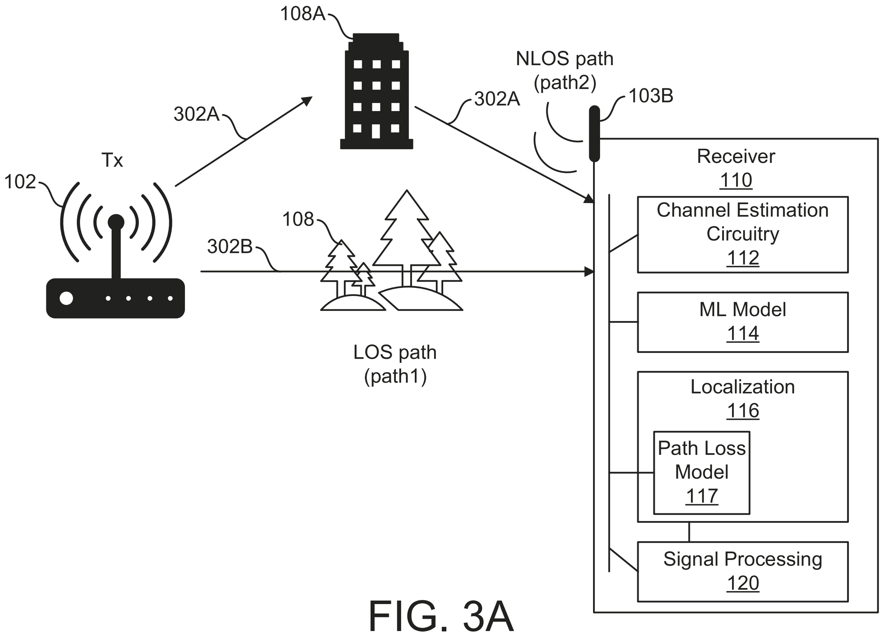

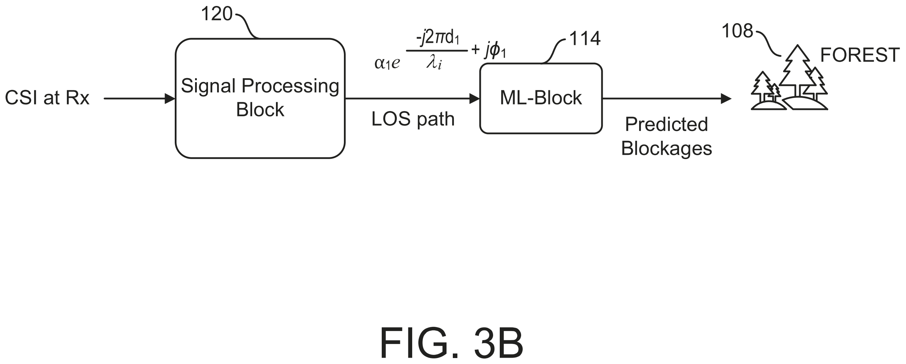

FIG. 3A depicts an example the transmitter 102 and the receiver 110, in accordance with some embodiments. In this example, multipath RF signals, such as multipath RF signals 302A and 302B, are received by the receiver 110. When this is the case, the receiver 110 may use an inverse Fourier transform (IFFT) to determine coarse estimates of the distance traveled by each of the multipath RF signals 302A and 302B in order to decompose the RF channels observed for each of the multipath RF signals 302A-302B. For localization, the line-of-sight (LOS) path may be the focus of the signal processing circuitry 120, so the path with a least time-of-flight (ToF) may be assumed as a LOS path. As can be seen at FIG. 3A, multipath RF signal 302B is identified, based on ToF, as the LOS path. Next, the CSI (and/or RSSI) for the identified LOS, such as multipath RF signal 302B, may be provided as an input into the ML model 114 at the receiver 110. Based on the input, the "trained" ML model 114 may then output a prediction of the object types (e.g., tree, building, et.) in the multipath RF signal 302B. This process is depicted at FIG. 3B, where the LOS path CSI is processed and provide to the ML model 114 for blockage prediction.

With respect to optimizing the path loss model 117, the objects (which are predicted by the output of ML model 114) in the RF signal path(s) between the transmitter 102 and receiver 110 may be used to fine tune the path loss parameters of the path loss model (see, e.g., Equation 2), such that the optimized path loss model may then provide an enhanced or optimized location of the receiver and/or transmitter (e.g., an optimized distance between the receiver-transmitter pair). To that end, Equation 2 may be revised as follows: $\frac{PL \left(d\right) - PL \left({d}_{0}\right) - {N}_{σ}}{10 n} - log \left({d}_{0}\right) = log \left({d}_{localization}\right)$ wherein
*PL*(*d*) denotes path loss observed at the receiver 110 (which may be calculated based on the RSSI or other channel indicator) and the square mean of the absolute value of the subcarriers of the channel); and
*d*₀ is known beforehand as shown by Equation 2.

For *N_{σ}* , *PL*(*d*₀), and *n*, the precomputed path loss parameters for the predicted blockage may be used (e.g., the FOREST type object may be used as shown at object 108 at FIG. 3A). Based on these, the accurate distance between the receiver 110 and the transmitter 102 may be determined (e.g., *d_{localization}*).

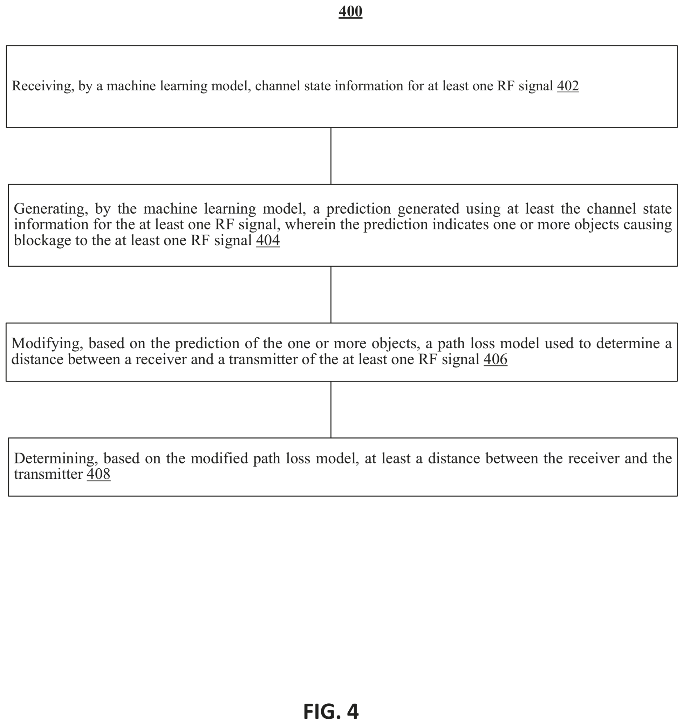

FIG. 4 depicts an example process 400 for a machine learning model predicting RF blockage, in accordance with some embodiments.

At 402, the process may include receiving, by a machine learning model, channel state information for at least one RF signal, in accordance with some embodiments. Referring to the example of FIG. 1 for example, the ML model 114 may receive channel state information (which may also include RSSI and/or other channel information or coefficients) for the RF signal(s) 104 transmitted by the transmitter 102 and received by the receiver 110. In some embodiments, the channel state information indicates channel state for a line of sight portion of the received RF signal (e.g., as noted with respect to FIG. 3B, the multipath, non-line of sight portions may be filtered or removed).

At 404, the process may include generating, by the machine learning model, a prediction generated using at least the channel state information for the at least one RF signal, wherein the prediction indicates one or more objects causing blockage to the at least one RF signal, in accordance with some embodiments. Referring to the example of FIG. 1 for example, the ML model 114 may output a prediction, based at least on the CSI inputs received at 402, of the one or more objects 108 that might be causing a blockage to the RF signal 104 along the path 105 between the receiver 110 and the transmitter 102. The ML model may be trained to predict RF blockages using for example the digital twin 220 (e.g., a wireless environment blockage model that simulates different outdoor wireless environments and blockages).

At 406, the process may include modifying, based on the prediction of the one or more objects, a path loss model used to determine a distance between a receiver and a transmitter of the at least one RF signal, in accordance with some example embodiments. Referring to FIG. 1 for example, the PL model 117 (e.g., path loss model as noted above with respect to Equation 2) may be modified based on the objects predicted by the ML model 114. For example, if the ML model 114 predicts RF blockage caused by objects, such as trees (e.g., a forest), the path loss model would be modified to take this into account. To illustrate further, Equation 2 may be modified by adjusting the path loss model of Equation 2, such that *PL*(*d*₀) is adjusted to 21.254, n (path loss exponent) is adjusted to 3.616, and σ is adjusted to 0.891. The modifying may take the form of selecting coefficients or a path loss model having for example the *PL*(*d*₀) of 21.254, n (path loss exponent) of 3.616, and σ of 0.891.

At 408, the process may include determining, based on the modified path loss model, at least a distance between the receiver and the transmitter, in accordance with some embodiments. Referring to FIG. 1 for example, the modified PL model 117 may be used to determine a distance between the receiver 110 and the transmitter 102. Given for example objects such as a forest (predicted by the ML model 114), the path loss model may be modified (e.g., optimized, fine-tuned, etc. at 406) to take into account the higher path loss, so that the modified PL model 117 can provide a more accurate location, such as the distance between the receiver 110 and transmitter 102. Given additional information (e.g., angle of arrival), the location of the receiver 110 and transmitter 102 may also be enhanced. The enhanced distance between the receiver and transmitter may advantageously be used to enhance operation of the transmitter or receiver (e.g., modulation and coding scheme selection, power usage, beam selection, etc.).

The ML model used at process 400 may be a trained ML model. For example, ML model 114 may be trained as noted using the digital twin 220 configured to include at least one channel state information mapped to at least one type of RF blockage caused by at least one object. In other words, the digital twin simulates different values of CSI values mapped to different types of objects (e.g., building, a tree, a road, a field, a vehicle, a person, and/or a body of water) and corresponding RF path loss model parameters (e.g., distances (*d*), attenuations (*a*), etc.). During training of the ML model 114, the digital twin is applied to the ML model. For example, at least one channel state information of the digital twin is provided as an input to the machine learning model to enable the machine learning model weights to converge and learn how to predict at the output of the machine learning model the at least one object.

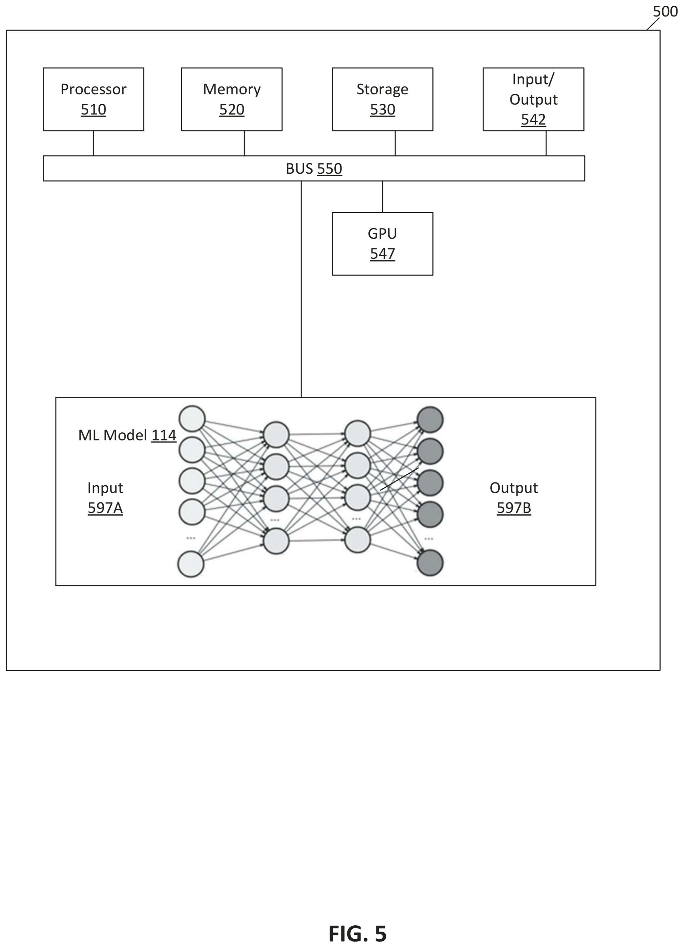

FIG. 5 depicts an example of an apparatus 500 (which may comprise or be comprised in a user equipment) including an ML model 114. Referring to FIG. 5, the apparatus 500 may be comprised in a device, such as receiver 110 and/or other processor-based devices which can host a ML model.

The apparatus 500 may include one or more of the following: at least one processor 510, such as central processing unit and/or the like, at least one memory 520, at least one storage device 530, at least one input and/or output device 542, and at least one graphics processing unit 547, all of which may be coupled via a bus 550.

As shown in FIG. 5, the processor 510 is capable of processing instructions for execution within the apparatus 500. In some implementations of the current subject matter, the processor 510 can be a single-threaded processor. Alternately, the processor 510 can be a multi-threaded processor. The processor may be a multi-core processor having a plurality or processors or a single core processor. The processor 510 is capable of processing instructions stored in the memory 520 and/or on the storage device 530 and/or capable of generating display of information for a user interface provided via the input/output device 542. The memory 520 is a computer readable medium, such as volatile and/or non-volatile, that stores information within the apparatus 500. The memory 520 can store data structures representing the nodes of the ML model (e.g., parameters, such as weights and/or other configuration information for at least one ML model). The storage device 530 may be capable of providing persistent storage for the apparatus 500. The storage device 530 may be any type of storage device (e.g., a hard disk device, an optical disk device, and/or other suitable persistent storage or memory mechanisms). The input/output device 542 provides input/output operations for the apparatus 500. In some implementations of the current subject matter, the input/output device 542 includes a keyboard and/or pointing device. In various implementations, the input/output device 542 includes a display unit for displaying graphical user interfaces. According to some implementations of the current subject matter, the input/output device 542 can provide input/output operations for a network device (e.g., to couple to a network, bus, and/or the like). For example, the input/output device 542 can include Ethernet or WiFi ports or other networking ports to communicate with one or more wired and/or wireless networks (e.g., a local area network (LAN), a wide area network (WAN), the Internet).

The apparatus 500 may include at least one graphics processing unit 547. The GPUs may be used in the execution of the ML model 114. Alternatively, or additionally, the at least one graphics processing unit 547 may comprise an AI chip and/or the like.

FIG. 5 also depicts an example of a ML model 114 hosted at the apparatus 500. The structure and type of the ML model 114 is merely an example as other types and structures may be used as well.

The ML model 114 may be trained to perform an inference task, such as a perform multiple classifications based on the input 597A, such as the CSI and/or RSI for a received signal. And, the ML model 114 may output 597B an indication of the classification of an input 597A, such as the type(s) of object 108 in the RF signal path. For example, given an input of at least CSI, the ML model 114 provides an indication of the types of one or more objects (e.g., forest, buildings, etc.) which might have been in the RF path between the transmitter-receiver pair.

Although some of the examples refer to the ML model 114 used in training and inference as a neural network, other types of ML models may be used as well. For example, the ML model may comprise a variety of ML model types including one or more of the following: a deep neural network, a convolutional neural network, decision tree(s), graph neural network(s), and/or other types of machine learning models.

As noted above, during training of the ML model 114, the digital twin is applied as input 597A to the ML model, so for example, channel state information of the digital twin is provided as at the input 597A to enable weights of the machine learning model to converge and learn how to predict at the output 597B of the machine learning model the at least one object. As the digital twin is labeled (e.g., CSI is labeled to indicate objects, path loss parameters, etc.), the ML model 114 learns via supervised learning.

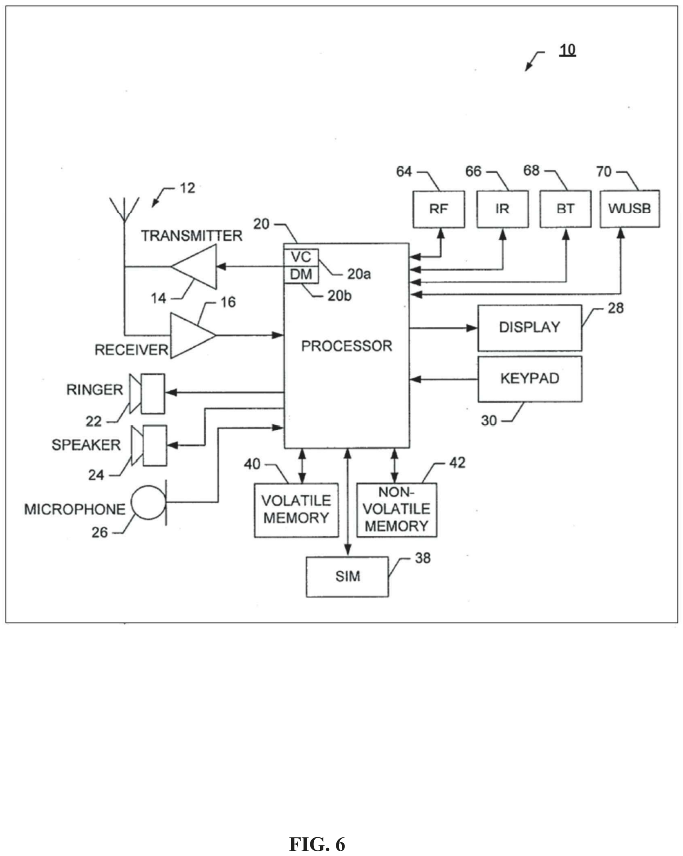

FIG. 6 illustrates a block diagram of an apparatus 10, in accordance with some embodiments. The apparatus 10 may comprise or be comprised in a user equipment, such as user equipment (e.g., user entity, PRUs, etc.). As noted, the user equipment may include a transmitter, such as transmitter 102, and/or a receiver, such as receiver 110. In general, the various embodiments of the user equipment can include cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, as well as portable units or terminals that incorporate combinations of such functions, in addition for vehicles such as autos and/or truck and aerial vehicles such as manned or unmanned aerial vehicle and as well as portable units or terminals that incorporate combinations of such functions. The user equipment may comprise or be comprised in an IoT device, an Industrial IoT (IIoT) device, and/or the like. In the case of an IoT device or IToT device, the UE may be configured to operate with less resources (in terms of for example power, processing speed, memory, and the like) when compared to a smartphone, for example.

The apparatus 10 may include at least one antenna 12 in communication with a transmitter 14 and a receiver 16. Alternatively transmit and receive antennas may be separate. The apparatus 10 may also include a processor 20 configured to provide signals to and receive signals from the transmitter and receiver, respectively, and to control the functioning of the apparatus. Processor 20 may be configured to control the functioning of the transmitter and receiver by effecting control signalling via electrical leads to the transmitter and receiver. Likewise, processor 20 may be configured to control other elements of apparatus 10 by effecting control signalling via electrical leads connecting processor 20 to the other elements, such as a display or a memory. The processor 20 may, for example, be embodied in a variety of ways including circuitry, at least one processing core, one or more microprocessors with accompanying digital signal processor(s), one or more processor(s) without an accompanying digital signal processor, one or more coprocessors, one or more multi-core processors, one or more controllers, processing circuitry, one or more computers, various other processing elements including integrated circuits (for example, an application specific integrated circuit (ASIC), a field programmable gate array (FPGA), and/or the like), or some combination thereof. Accordingly, although illustrated in FIG. 6 as a single processor, in some embodiments the processor 20 may comprise a plurality of processors or processing cores. Alternatively, or additionally, the apparatus 10 may include GPUs, AI chips, and/or other aspects to execute at least in part the ML models as noted above with respect to FIG. 2, for example.

The apparatus 10 may be capable of operating with one or more air interface standards, communication protocols, modulation types, access types, and/or the like. Signals sent and received by the processor 20 may include signalling information in accordance with an air interface standard of an applicable cellular system, and/or any number of different wireline or wireless networking techniques, comprising but not limited to Wi-Fi, wireless local access network (WLAN) techniques, such as Institute of Electrical and Electronics Engineers (IEEE) 802.11, 802.16, 802.3, ADSL, DOCSIS, and/or the like. In addition, these signals may include speech data, user generated data, user requested data, and/or the like.

For example, the apparatus 10 and/or a cellular modem therein may be capable of operating in accordance with various first generation (1G) communication protocols, second generation (2G or 2.5G) communication protocols, third-generation (3G) communication protocols, fourth-generation (4G) communication protocols, fifth-generation (5G) communication protocols, sixth-generation (6G) communication protocols, Internet Protocol Multimedia Subsystem (IMS) communication protocols (for example, session initiation protocol (SIP) and/or the like. For example, the apparatus 10 may be capable of operating in accordance with 2G wireless communication protocols IS-136, Time Division Multiple Access TDMA, Global System for Mobile communications, GSM, IS-95, Code Division Multiple Access, CDMA, and/or the like. In addition, for example, the apparatus 10 may be capable of operating in accordance with 2.5G wireless communication protocols General Packet Radio Service (GPRS), Enhanced Data GSM Environment (EDGE), and/or the like. Further, for example, the apparatus 10 may be capable of operating in accordance with 3G wireless communication protocols, such as Universal Mobile Telecommunications System (UMTS), Code Division Multiple Access 2000, Wideband Code Division Multiple Access (WCDMA), Time Division-Synchronous Code Division Multiple Access (TD-SCDMA), and/or the like. The apparatus 10 may be additionally capable of operating in accordance with 3.9G wireless communication protocols, such as Long Term Evolution (LTE), Evolved Universal Terrestrial Radio Access Network (E-UTRAN), and/or the like. Additionally, for example, the apparatus 10 may be capable of operating in accordance with 4G wireless communication protocols, such as LTE Advanced, 5G, 6G, and/or the like as well as similar wireless communication protocols that may be subsequently developed.

It is understood that the processor 20 may include circuitry for implementing audio/video and logic functions of apparatus 10. For example, the processor 20 may comprise a digital signal processor device, a microprocessor device, an analog-to-digital converter, a digital-to-analog converter, and/or the like. Control and signal processing functions of the apparatus 10 may be allocated between these devices according to their respective capabilities. The processor 20 may additionally comprise an internal voice coder (VC) 20a, an internal data modem (DM) 20b, and/or the like. Further, the processor 20 may include functionality to operate one or more software programs, which may be stored in memory. In general, processor 20 and stored software instructions may be configured to cause apparatus 10 to perform actions. For example, processor 20 may be capable of operating a connectivity program, such as a web browser. The connectivity program may allow the apparatus 10 to transmit and receive web content, such as location-based content, according to a protocol, such as wireless application protocol, WAP, hypertext transfer protocol, HTTP, and/or the like.

Apparatus 10 may also comprise a user interface including, for example, an earphone or speaker 24, a ringer 22, a microphone 26, a display 28, a user input interface, and/or the like, which may be operationally coupled to the processor 20. The display 28 may, as noted above, include a touch sensitive display, where a user may touch and/or gesture to make selections, enter values, and/or the like. The processor 20 may also include user interface circuitry configured to control at least some functions of one or more elements of the user interface, such as the speaker 24, the ringer 22, the microphone 26, the display 28, and/or the like. The processor 20 and/or user interface circuitry comprising the processor 20 may be configured to control one or more functions of one or more elements of the user interface through computer program instructions, for example, software and/or firmware, stored on a memory accessible to the processor 20, for example, volatile memory 40, non-volatile memory 42, and/or the like. The apparatus 10 may include a battery for powering various circuits related to the mobile terminal, for example, a circuit to provide mechanical vibration as a detectable output. The user input interface may comprise devices allowing the apparatus 20 to receive data, such as a keypad 30 (which can be a virtual keyboard presented on display 28 or an externally coupled keyboard) and/or other input devices.

As shown in FIG. 6, apparatus 10 may also include one or more mechanisms for sharing and/or obtaining data. For example, the apparatus 10 may include a short-range radio frequency (RF) transceiver and/or interrogator 64, so data may be shared with and/or obtained from electronic devices in accordance with RF techniques. The apparatus 10 may include other short-range transceivers, such as an infrared (IR) transceiver 66, a Bluetooth^{™} (BT) transceiver 68 operating using Bluetooth^{™} wireless technology, a wireless universal serial bus (USB) transceiver 70, a Bluetooth^{™} Low Energy transceiver, a ZigBee transceiver, an ANT transceiver, a cellular device-to-device transceiver, a wireless local area link transceiver, and/or any other short-range radio technology. Apparatus 10 and, in particular, the short-range transceiver may be capable of transmitting data to and/or receiving data from electronic devices within the proximity of the apparatus, such as within 10 meters, for example. The apparatus 10 including the Wi-Fi or wireless local area networking modem may also be capable of transmitting and/or receiving data from electronic devices according to various wireless networking techniques, including 6LoWpan, Wi-Fi, Wi-Fi low power, WLAN techniques such as IEEE 802.11 techniques, IEEE 802.15 techniques, IEEE 802.16 techniques, and/or the like.

The apparatus 10 may comprise memory, such as a subscriber identity module (SIM) 38, a removable user identity module (R-UIM), an eUICC, an UICC, U-SIM, and/or the like, which may store information elements related to a mobile subscriber. In addition to the SIM, the apparatus 10 may include other removable and/or fixed memory. The apparatus 10 may include volatile memory 40 and/or non-volatile memory 42. For example, volatile memory 40 may include Random Access Memory (RAM) including dynamic and/or static RAM, on-chip or off-chip cache memory, and/or the like. Non-volatile memory 42, which may be embedded and/or removable, may include, for example, read-only memory, flash memory, magnetic storage devices, for example, hard disks, floppy disk drives, magnetic tape, optical disc drives and/or media, non-volatile random access memory (NVRAM), and/or the like. Like volatile memory 40, non-volatile memory 42 may include a cache area for temporary storage of data. At least part of the volatile and/or non-volatile memory may be embedded in processor 20. The memories may store one or more software programs, instructions, pieces of information, data, and/or the like which may be used by the apparatus for performing operations disclosed herein.

The memories may comprise an identifier, such as an international mobile equipment identification (IMEI) code, capable of uniquely identifying apparatus 10. The memories may comprise an identifier, such as an international mobile equipment identification (IMEI) code, capable of uniquely identifying apparatus 10. In the example embodiment, the processor 20 may be configured using computer code stored at memory 40 and/or 42 to the provide operations disclosed herein with respect to the UE, such as the user entity.

Some of the embodiments disclosed herein may be implemented in software, hardware, application logic, or a combination of software, hardware, and application logic. The software, application logic, and/or hardware may reside on memory 40, the control apparatus 20, or electronic components, for example. In some embodiments, the application logic, software or an instruction set is maintained on any one of various conventional computer-readable media. In the context of this document, a "computer-readable storage medium" may be any non-transitory media that can contain, store, communicate, propagate or transport the instructions for use by or in connection with an instruction execution system, apparatus, or device, such as a computer or data processor circuitry; computer-readable medium may comprise a non-transitory computer-readable storage medium that may be any media that can contain or store the instructions for use by or in connection with an instruction execution system, apparatus, or device, such as a computer.

Without in any way limiting the scope, interpretation, or application of the claims appearing below, a technical effect of one or more of the example embodiments disclosed herein may include enhanced distance determination of a transmitter-receiver pair.

The subject matter described herein may be embodied in systems, apparatus, methods, and/or articles depending on the desired configuration. For example, the base stations and user equipment (or one or more components therein) and/or the processes described herein can be implemented using one or more of the following: a processor executing program code, an application-specific integrated circuit (ASIC), a digital signal processor (DSP), an embedded processor, a field programmable gate array (FPGA), and/or combinations thereof. These various implementations may include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device. These computer programs (also known as programs, software, software applications, applications, components, program code, or code) include machine instructions for a programmable processor, and may be implemented in a high-level procedural and/or object-oriented programming language, and/or in assembly/machine language. As used herein, the term "computer-readable medium" refers to any computer program product, machine-readable medium, computer-readable storage medium, apparatus and/or device (for example, magnetic discs, optical disks, memory, Programmable Logic Devices (PLDs)) used to provide machine instructions and/or data to a programmable processor, including a machine-readable medium that receives machine instructions. Similarly, systems are also described herein that may include a processor and a memory coupled to the processor. The memory may include one or more programs that cause the processor to perform one or more of the operations described herein.

Although a few variations have been described in detail above, other modifications or additions are possible. In particular, further features and/or variations may be provided in addition to those set forth herein. Moreover, the implementations described above may be directed to various combinations and subcombinations of the disclosed features and/or combinations and subcombinations of several further features disclosed above. Other embodiments may be within the scope of the following claims.

If desired, the different functions discussed herein may be performed in a different order and/or concurrently with each other. Furthermore, if desired, one or more of the above-described functions may be optional or may be combined. Although various aspects of some of the embodiments are set out in the independent claims, other aspects of some of the embodiments comprise other combinations of features from the described embodiments and/or the dependent claims with the features of the independent claims, and not solely the combinations explicitly set out in the claims. It is also noted herein that while the above describes example embodiments, these descriptions should not be viewed in a limiting sense. Rather, there are several variations and modifications that may be made without departing from the scope of some of the embodiments as defined in the appended claims. Other embodiments may be within the scope of the following claims. The term "based on" includes "based on at least." The use of the phase "such as" means "such as for example" unless otherwise indicated.

## Claims

1. A method comprising:
receiving, by a machine learning model, channel state information for at least one radio frequency signal;
generating, by the machine learning model, a prediction generated using at least the channel state information for the at least one radio frequency signal, wherein the prediction indicates one or more objects causing blockage to the at least one radio frequency signal;
modifying, based on the prediction of the one or more objects, a path loss model used to determine a distance between a receiver and a transmitter of the at least one radio frequency signal; and
determining, based on the modified path loss model, at least a distance between the receiver and the transmitter.

2. The method of claim 1, wherein the path loss model is modified by adjusting or selecting, based on the prediction of the one or more objects, one or more coefficients of the path loss model.

3. The method of claim 2, wherein the one or more coefficients comprise a mean path loss coefficient, a path loss exponent, and/or a standard deviation of a random variable.

4. The method of claim 1 further comprising:
training the machine learning model using a digital twin configured to include at least one channel state information mapped to at least one type of radio frequency blockage caused by at least one object, wherein the at least one object comprises a building, a tree, a road, a field, a vehicle, a person, and/or a body of water.

5. The method of claim 4, wherein the training further comprises applying the at least one channel state information to an input of the machine learning model to enable one or more weights of the machine learning model to converge and learn how to predict, at an output of the machine learning model, the at least one object.

6. The method of claim 1, wherein the machine learning model is comprised at the receiver.

7. The method of claim 1, wherein the channel state information for at least one radio frequency signal indicates channel state for a line of sight portion of the at least one radio signal.

8. An apparatus comprising:
at least one processor; and
at least one memory including instructions which when executed by the at least one processor causes operations comprising:
receiving, by a machine learning model, channel state information for at least one radio frequency signal;
generating, by the machine learning model, a prediction generated using at least the channel state information for the at least one radio frequency signal, wherein the prediction indicates one or more objects causing blockage to the at least one radio frequency signal;
modifying, based on the prediction of the one or more objects, a path loss model used to determine a distance between a receiver and a transmitter of the at least one radio frequency signal; and
determining, based on the modified path loss model, at least a distance between the receiver and the transmitter.

9. The apparatus of claim 8, wherein the path loss model is modified by adjusting or selecting, based on the prediction of the one or more objects, one or more coefficients of the path loss model.

10. The apparatus of claim 9, wherein the one or more coefficients comprise a mean path loss coefficient, a path loss exponent, and/or a standard deviation of a random variable.

11. The apparatus of claim 8 further comprising:
training the machine learning model using a digital twin configured to include at least one channel state information mapped to at least one type of radio frequency blockage caused by at least one object, wherein the at least one object comprises a building, a tree, a road, a field, a vehicle, a person, and/or a body of water.

12. The apparatus of claim 11, wherein the training further comprises applying the at least one channel state information to an input of the machine learning model to enable one or more weights of the machine learning model to converge and learn how to predict at an output of the machine learning model the at least one object.

13. The apparatus of claim 8, wherein the machine learning model is comprised at the receiver.

14. The apparatus of claim 8, wherein the channel state information for at least one radio frequency signal indicates channel state for a line of sight portion of the at least one radio signal.

15. A non-transitory computer-readable storage medium including instructions which when executed by at least one processor causes operations comprising:
receiving, by a machine learning model, channel state information for at least one radio frequency signal;
generating, by the machine learning model, a prediction generated using at least the channel state information for the at least one radio frequency signal, wherein the prediction indicates one or more objects causing blockage to the at least one radio frequency signal;
modifying, based on the prediction of the one or more objects, a path loss model used to determine a distance between a receiver and a transmitter of the at least one radio frequency signal; and
determining, based on the modified path loss model, at least a distance between the receiver and the transmitter.
